# EUROPEAN PATENT APPLICATION

(11) **EP 4 489 483 A1**
(43) Date of publication of application: **08.01.2025**
(21) Application number: 23762895.3
(22) Date of filing: 01.03.2023
(51) Int. Cl.: H04W 60/00, H04W 4/50, H04W 4/60

(54) **INFORMATION PROCESSING METHOD AND APPARATUS, COMMUNICATION DEVICE AND READABLE STORAGE MEDIUM**

(30) Priority: 04.03.2022 CN 202210211052
(71) Applicant: VIVO MOBILE COMMUNICATION CO., LTD., Dongguan, Guangdong 523863 (CN)
(72) Inventor: KE, Xiaowan, Dongguan, Guangdong 523863 (CN)
(74) Representative: Conti, Marco
(86) International application number: PCT/CN2023/078910
(87) International publication number: WO 2023/165496

(57) **Abstract**

This application discloses an information processing method and apparatus, a communication device, and a readable storage medium, and belongs to the technical field of communications. The information processing method includes: A first communication device executes a first operation. The first operation includes at least one of the following: sending a first request message and/or first request information, wherein the first request message is used for at least one of the following: registering a first service, updating the first service, and registering/updating a context of the first communication device; the first request information includes at least one of the following: information of the first communication device, description information of the first service, information of a RAN network element associated with the first service, and information of a CN network element that supports the first service; receiving a first subscription request message; and executing a second operation according to the received first subscription request message; and second operation includes at least one of the following: determining a RAN network element that provides information/events, asking the RAN network element for a piece of subscribed information/event, and reporting the subscribed information/event.

## Description

### COSS-REFERENCE TO RELATED APPLICATIONS

This application claims the priority of Chinese Patent Application No. 202210211052.8 filed in China on March 04, 2022, the entire content of which is hereby incorporated by reference.

### TECHNICAL FIELD

This application belongs to the technical field of communications, and in particular, to an information processing method and apparatus, a communication device, and a readable storage medium.

### BACKGROUND

Among existing networks, since a radio access network (Radio Access Network, RAN) does not support servitization, a core network (Core Network, CN) network element may act as the RAN to provide quality of service information and/or a network state to an application through a servitization interface, so that the application can invoke services. However, in this case, in a scenario for subscribing a piece of information/event of the RAN, the CN network element cannot currently determine a RAN network element that provides the information/event.

### SUMMARY

Embodiments of this application provide an information processing method and apparatus, a communication device, and a readable storage medium, which can solve the problem that in a scenario for subscribing a piece of information/event of a RAN, a CN network element cannot currently determine a RAN network element that provides the information/event.

In a first aspect, an information processing method is provided. The method includes:
A first communication device executes a first operation, wherein the first operation includes at least one of the following:
sending a first request message and/or first request information, wherein the first request message is used for at least one of the following: registering a first service, updating the first service, registering a context of the first communication device, updating the context of the first communication device, registering a first data set, and updating the first data set; the first request information includes at least one of the following: information of the first communication device, description information of the first service, information of a radio access network (RAN) network element associated with the first service, information of a core network (CN) network element that supports the first service, description information of the first data set, information of a RAN network element that provides data of the first data set, and information of a CN network element that provides data of the first data set;
receiving a first subscription request message and/or first subscription request information; and
executing a second operation according to the received first subscription request message; and
wherein the first subscription request message is used for one of the following: subscribing to the first service, and subscribing to a piece of information/event provided by a RAN network element; the first subscription request information includes at least one of the following: the description information of the first service, the information of the RAN network element associated with the first service, and the information/event requested to be subscribed to;
wherein the second operation includes at least one of the following:
determining the RAN network element that provides the information/event;
asking the RAN network element for the information/event; and
reporting the subscribed information/event;
wherein the first service is used for at least one of the following: publishing the information/event provided by the RAN network element, providing a subscription to the information/event provided by the RAN network element, and reporting the information/event provided by the RAN network element; and
the data in the first data set includes the information/event provided by the RAN network element.

In a second aspect, an information processing method is provided. The method includes:
A second communication device obtains second information; and
The second communication device executes a third operation according to the second information;
wherein the second information includes at least one of the following:
a first request message and/or first request information received from a first source end;
a first discovery message and/or first discovery information received from a second source end;
a first query request message and/or first query request information received from the second source end; and
a second subscription request message and/or second subscription request information received from the second source end;
the first request message is used for at least one of the following: registering a first service, updating the first service, registering a context of the first communication device, and updating the context of the first communication device;
the first request information includes at least one of the following: information of the first communication device, description information of the first service, information of a RAN network element associated with the first service, information of a CN network element that supports the first service, description information of a first data set, information of a RAN network element that provides data of the first data set, and information of a CN network element that provides data of the first data set;
the first discovery message is used for at least one of the following: querying a network element that supports the first service, and querying the RAN network element associated with the first service;
the first discovery information includes at least one of the following: region information, information/events, the description information of the first service, information of a CN network element, information of a RAN network element, information of a network element of the second source end, and information of a terminal;
the first query request message is used for querying the data in the first data set;
the first query request information includes at least one of the following: the description information of the first data set, a piece of information/event requested to be queried, and the information of the RAN network element;
the second subscription request message is used for at least one of the following: subscribing to the first data set, and subscribing to a piece of information/event provided by the RAN network element;
the second subscription request information includes at least one of the following: the description information of the first data set, the information/event requested to be subscribed to, and the information of the RAN network element;
wherein the first service is used for at least one of the following: publishing the information/event provided by the RAN network element, providing a subscription to the information/event provided by the RAN network element, and reporting the information/event provided by the RAN network element; and
the data in the first data set includes the information/event provided by the RAN network element;
wherein the third operation includes at least one of the following:
saving first associated information;
querying, according to the first discovery information and/or the first associated information, the RAN network element associated with the first service; and
querying, according to the first discovery information and/or the first associated information, the CN network element associated with the first service;
sending third information to the second source end, wherein the third information includes at least one of the following: the information of the RAN network element associated with the first service, and the information of the CN network element that supports the first service;
returning at least one of the following to the second source end: the queried information/event, and the queried data of the first data set; and
reporting at least one of the following to the second source end: the subscribed information/event, and the subscribed data of the first data set; and
wherein the first associated information includes at least one of the following: the description information of the first service, the information of the RAN network element associated with the first service, the information of the CN network element that supports the first service, the description information of the first data set, the information of the RAN network element that provides the data of the first data set, and the information of the CN network element that provides the data of the first data set.

In a third aspect, an information processing method is provided. The method includes:
A third communication device executes a fourth operation, wherein the fourth operation includes at least one of the following:
determining a first target end; and
sending a first subscription request message and/or first subscription request information to the first target end, wherein the first subscription request message is used for at least one of the following: subscribing to the first service, and subscribing to a piece of information/event provided by a RAN network element; the first subscription request information includes at least one of the following: description information of the first service, information of a RAN network element associated with the first service, and the information/event requested to be subscribed to;
sending a first query request message and/or first query request information to a second target end, wherein the first query request message is used for querying the data in the first data set; the first query request information includes at least one of the following: description information of the first data set, a piece of information/event requested to be queried, and information of an RAN network element;
sending a second subscription request message and/or second subscription request information to the second target end, wherein the second subscription request message is used for at least one of the following: subscribing to the first data set, and subscribing to a piece of information/event provided by the RAN network element; the second subscription request information includes at least one of the following: the description information of the first data set, the information/event requested to be subscribed to, and the information of the RAN network element;
wherein the first service is used for at least one of the following: publishing the information/event provided by the RAN network element, providing a subscription to the information/event provided by the RAN network element, and reporting the information/event provided by the RAN network element; and
the data in the first data set includes the information/event provided by the RAN network element.
In a fourth aspect, an information processing apparatus is provided, applied to a first communication device and including:
a first execution module, configured to execute a first operation, wherein the first operation includes at least one of the following:
sending a first request message and/or first request information, wherein the first request message is used for at least one of the following: registering a first service, updating the first service, registering a context of the first communication device, updating the context of the first communication device, registering a first data set, and updating the first data set; the first request information includes at least one of the following: information of the first communication device, description information of the first service, information of a radio access network (RAN) network element associated with the first service, information of a core network (CN) network element that supports the first service, description information of the first data set, information of a RAN network element that provides data of the first data set, and information of a CN network element that provides data of the first data set;
receiving a first subscription request message and/or first subscription request information; and
executing a second operation according to the received first subscription request message;
wherein the first subscription request message is used for one of the following: subscribing to the first service, and subscribing to a piece of information/event provided by a RAN network element;
the first subscription request information includes at least one of the following: description information of the first service, information of a RAN network element associated with the first service, and the information/event requested to be subscribed to;
wherein the second operation includes at least one of the following:
determining the RAN network element that provides the information/event;
asking the RAN network element for the information/event; and
reporting the subscribed information/event;
wherein the first service is used for at least one of the following: publishing the information/event provided by the RAN network element, providing a subscription to the information/event provided by the RAN network element, and reporting the information/event provided by the RAN network element; and
the data in the first data set includes the information/event provided by the RAN network element.

In a fifth aspect, an information processing apparatus is provided, applied to a second communication device and including:
an obtaining module, configured to obtain second information; and
a second execution module, configured to execute a third operation according to the second information;
wherein the second information includes at least one of the following:
a first request message and/or first request information received from a first source end;
a first discovery message and/or first discovery information received from a second source end;
a first query request message and/or first query request information received from the second source end; and
a second subscription request message and/or second subscription request information received from the second source end;
the first request message is used for at least one of the following: registering a first service, updating the first service, registering a context of the first communication device, and updating the context of the first communication device;
the first request information includes at least one of the following: information of the first communication device, description information of the first service, information of a RAN network element associated with the first service, information of a CN network element that supports the first service, description information of a first data set, information of a RAN network element that provides data of the first data set, and information of a CN network element that provides data of the first data set;
the first discovery message is used for at least one of the following: querying a network element that supports the first service, and querying the RAN network element associated with the first service;
the first discovery information includes at least one of the following: region information, information/events, the description information of the first service, information of a CN network element, information of a RAN network element, information of a network element of the second source end, and information of a terminal;
the first query request message is used for querying the data in the first data set;
the first query request information includes at least one of the following: description information of the first data set, a piece of information/event requested to be queried, and information of an RAN network element;
the second subscription request message is used for at least one of the following: subscribing to the first data set, and subscribing to a piece of information/event provided by the RAN network element;
the second subscription request information includes at least one of the following: the description information of the first data set, the information/event requested to be subscribed to, and the information of the RAN network element;
wherein the first service is used for at least one of the following: publishing the information/event provided by the RAN network element, providing a subscription to the information/event provided by the RAN network element, and reporting the information/event provided by the RAN network element; and
the data in the first data set includes the information/event provided by the RAN network element;
wherein the third operation includes at least one of the following:
saving first associated information;
querying, according to the first discovery information and/or the first associated information, the RAN network element associated with the first service;
querying, according to the first discovery information and/or the first associated information, the CN network element associated with the first service;
sending third information to the second source end, wherein the third information includes at least one of the following: the information of the RAN network element associated with the first service, and the information of the CN network element that supports the first service;
returning at least one of the following to the second source end: the queried information/event, and the queried data of the first data set; and
reporting at least one of the following to the second source end: the subscribed information/event, and the subscribed data of the first data set; and
wherein the first associated information includes at least one of the following: the description information of the first service, the information of the RAN network element associated with the first service, the information of the CN network element that supports the first service, the description information of the first data set, the information of the RAN network element that provides the data of the first data set, and the information of the CN network element that provides the data of the first data set.

In a sixth aspect, an information processing apparatus is provided, applied to a third communication device and including:
a third execution module, configured to execute a fourth operation, wherein the fourth operation includes at least one of the following:
determining a first target end; and
sending a first subscription request message and/or first subscription request information to the first target end, wherein the first subscription request message is used for at least one of the following: subscribing to the first service, and subscribing to a piece of information/event provided by a RAN network element; the first subscription request information includes at least one of the following: description information of the first service, information of a RAN network element associated with the first service, and the information/event requested to be subscribed to;
sending a first query request message and/or first query request information to a second target end, wherein the first query request message is used for querying the data in the first data set; the first query request information includes at least one of the following: description information of the first data set, a piece of information/event requested to be queried, and information of an RAN network element;
sending a second subscription request message and/or second subscription request information to the second target end, wherein the second subscription request message is used for at least one of the following: subscribing to the first data set, and subscribing to a piece of information/event provided by the RAN network element; the second subscription request information includes at least one of the following: the description information of the first data set, the information/event requested to be subscribed to, and the information of the RAN network element;
wherein the first service is used for at least one of the following: publishing the information/event provided by the RAN network element, providing a subscription to the information/event provided by the RAN network element, and reporting the information/event provided by the RAN network element; and
the data in the first data set includes the information/event provided by the RAN network element.

In a seventh aspect, a communication device is provided. The communication device includes a processor and a memory. The memory stores a program or an instruction runnable or executable on the processor; and the program or the instruction, when run or executed by the processor, implements the steps of the method as described in the first aspect, the steps of the method as described in the second aspect, or the steps of the method as described in the third aspect.

In an eighth aspect, a communication system is provided, including a first communication device, a second communication device, and a third communication device. The first communication device may be configured to execute the steps of the information processing method as described in the first aspect; the second communication device may be configured to execute the steps of the information processing method as described in the second aspect; and the second communication device may be configured to execute the steps of the information processing method as described in the third aspect.

In a ninth aspect, a readable storage medium is provided. The readable storage medium stores a program or an instruction. The program or the instruction, when run or executed by a processor, implements the steps of the method as described in the first aspect, or the steps of the method as described in the second aspect, or the steps of the method as described in the third aspect.

In a tenth aspect, a chip is provided. The chip includes a processor and a communication interface; the communication interface is coupled to the processor; and the processor is configured to run or execute a program or an instruction to implement the steps of the method as described in the first aspect, or the steps of the method as described in the second aspect, or the steps of the method as described in the third aspect.

In an eleventh aspect, a computer program/program product is provided. The computer program/program product is stored in a storage medium; and the computer program/program product is executed by at least one processor to implement the steps of the method as described in the first aspect, or the steps of the method as described in the second aspect, or the steps of the method as described in the third aspect.

In this embodiment of this application, in a scenario for subscribing to a piece of information/event of the RAN, a first CN network element (such as, but not limited to, an AMF, an SMF, a UPF, a DCCF, and an MFAF) may assist the RAN in publishing the information/event through a servitization interface, and execute service registration on a second CN network element (such as, but not limited to, an NRF, a BSF, a UDR, a UDM, and a CHF). In a case that a third CN network element (such as, but not limited to, an AF and an NEF) needs to subscribe to the information/event of the RAN, the first CN network element may be supported to determine a RAN network element that provides the information/event.

### BRIEF DESCRIPTION OF THE DRAWINGS

FIG. 1 is a block diagram of a wireless communication system to which an embodiment of this application is applicable;
FIG. 2 is a flowchart of an information processing method according to an embodiment of this application;
FIG. 3 is a flowchart of another information processing method according to an embodiment of this application;
FIG. 4 is a flowchart of another information processing method according to an embodiment of this application;
FIG. 5A is a flowchart of application scenario 1 according to an embodiment of this application;
FIG. 5B is a flowchart of application scenario 2 according to an embodiment of this application;
FIG. 6 is a schematic structural diagram of an information processing apparatus according to an embodiment of this application;
FIG. 7 is a schematic structural diagram of another information processing apparatus according to an embodiment of this application;
FIG. 8 is a schematic structural diagram of another information processing apparatus according to an embodiment of this application; and
FIG. 9 is a schematic structural diagram of a communication device according to an embodiment of this application.

### DETAILED DESCRIPTION

The technical solutions in embodiments of this application are clearly and completely described in the following with reference to the accompanying drawings in the embodiments of this application. Apparently, the described embodiments are merely some rather than all of the embodiments of this application. All other embodiments obtained by persons skilled in the art based on the embodiments of this application fall within the protection scope of this application.

This specification and claims of this application, and terms "first" and "second" are used to distinguish similar objects, but are unnecessarily used to describe a specific sequence or order. It should be understood that terms used like this is interchangeable where appropriate, so that the embodiments of this application can be implemented in an order other than those illustrated or described here. Furthermore, objects distinguished by "first", "second", and the like are usually of the same class and do not limit the number of objects. For example, the first object can be one or multiple. In addition, "and/or" used in this specification and the claims represents at least one of the connected objects. Symbol "/" usually represents an "or" relationship between front and back associated objects.

It is worth noting that the technology described in the embodiments of this application is not limited to a long term evolution (Long Term Evolution, LTE)/LTE Evolution (LTE-Advanced, LTE-A) system, and can alternatively be used in other wireless communication systems, such as code division multiple access (Code Division Multiple Access, CDMA), time division multiple access (Time Division Multiple Access, TDMA), frequency division multiple access (Frequency Division Multiple Access, FDMA), orthogonal frequency division multiple access (Orthogonal Frequency Division Multiple Access, OFDMA), single-carrier frequency-division multiple access (Single-carrier Frequency-Division Multiple Access, SC-FDMA), and other systems. The terms "system" and "network" in the embodiments of this application are often used interchangeably, and the described technology can be applied to both the aforementioned systems and radio technologies, as well as other systems and radio technologies. The following describes a new radio (New Radio, NR) system for the example purpose and uses the term NR in most of the following descriptions. However, these technologies can alternatively be applied to applications other than the NR system application, such as a 6th generation (6th Generation, 6G) communication system.

To support determining a RAN network element that provides a piece of information/event, the following problems need to be solved:

There are requirements in media services such as extended reality (Extended Reality, XR) as follows: Quality of service (Quality of Service, QoS) information, a network state, and the like are provided to an application to enable the application to determine a code and a rate, to facilitate better scheduling of networks and avoid network congestion. Since a RAN does not support a servitization interface, a CN network element may be used to act as the RAN to provide public information through the servitization interface to facilitate service invocation.

How a first CN network element assists the RAN in publishing a piece of information/event provided by the RAN through the servitization interface, how to register services to a second CN network element (such as, but not limited to, an NRF, a BSF, a UDR, a UDM, and a charging function (charging function, CHF)), how to index the first CN network element in a case that a third CN network element (such as an AF and an NEF) needs to subscribe to the information/event of the RAN, and how the first CN network element indexes a RAN network element that provides the information/event are problems mainly resolved in this application.

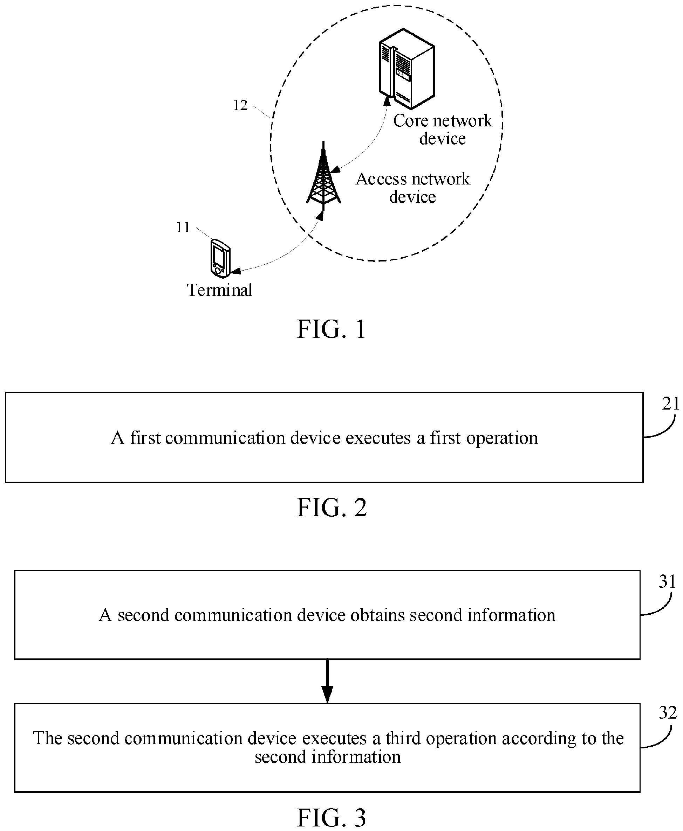

FIG. 1 shows a block diagram of a wireless communication system applicable to an embodiment of this application. The wireless communication system includes a terminal 11 and a network side device 12. The terminal 11 can be a mobile phone, a tablet personal computer (Tablet Personal Computer), a laptop computer (Laptop Computer) or also referred to as a laptop, a personal digital assistant (Personal Digital Assistant, PDA), a handheld computer, a netbook, ultra-mobile personal computer (ultra-mobile personal computer, UMPC), a mobile internet device (Mobile Internet Device, MID), an augmented reality (augmented reality, AR)/virtual reality (virtual reality, VR) device, a robot, a wearable device (Wearable Device), vehicle user equipment (Vehicle User Equipment, VUE), pedestrian user equipment (Pedestrian User Equipment, PUE), a smart home (home devices with wireless communication functions, such as a refrigerator, a television, a washing machine, or furniture), a game console, a personal computer (personal computer, PC), a teller machine, a vending machine, or other terminal side devices. The wearable device includes: a smart watch, a smart hand ring, a smart headphone, smart glasses, a smart jewelry (a smart bracelet, a smart ring, a smart necklace, a smart bangle, a smart anklet, and the like), a smart wristband, smart clothing, and the like. It should be noted, in the embodiments of this application, a specific type of the terminal 11 is not limited. The network side device 12 may include an access network device or a core network device. The access network device may alternatively be referred to as a radio access network device, a radio access network (Radio Access Network, RAN), a radio access network function, or a radio access network unit. The access network device may include a base station, a wireless local area network (Wireless Local Area Networks, WLAN) access point, a wireless fidelity (Wireless Fidelity, WiFi) node, and the like. The base station can be referred to as a node B, an evolution node B (eNB), an access point, a base transceiver station (Base Transceiver Station, BTS), a radio base station, a radio transceiver, a basic service set (Basic Service Set, BSS), an extended service set (Extended Service Set, ESS), a home B node, a home evolution type B node, a transmitting receiving point (Transmitting Receiving Point, TRP), or any other suitable term in the art, as long as the same technical effects are achieved. The base station is not limited to a particular technical vocabulary. It should be noted, in the embodiments of this application, only the base station in the NR system is taken as an example, but a specific type of the base station is not limited. The core network device may include, but is not limited to, at least one of the following: a core network node, a core network function, a mobility management entity (Mobility Management Entity, MME), an access and mobility management function (Access and Mobility Management Function, AMF), a session management function (Session Management Function, SMF), a user plane function (User Plane Function, UPF), a policy control function (Policy Control Function, PCF), a policy and charging rules function (Policy and Charging Rules Function, PCRF), an edge application server discovery function (Edge Application Server Discovery Function, EASDF), a unified data management (Unified Data Management, UDM), a unified data repository (Unified Data Repository, UDR), a home subscriber server (Home Subscriber Server, HSS), a centralized network configuration (Centralized network configuration, CNC), a network repository function (Network Repository Function, NRF), a network exposure function (NEF), a local NEF (Local NEF, or L-NEF), a binding support function (Binding Support Function, BSF), an application function (Application Function, AF), and the like. It should be noted, in the embodiments of this application, only the core network device in the NR system is taken as an example for introduction, but a specific type of the core network device is not limited.

In an optional embodiment of this application, being able to can express at least one of the following: allowing, supporting, tending to, and preferentially having an ability. Being unable to can represent at least one of the following: not allowing, not supporting, not tending to, and not having an ability

In an optional embodiment of this application, obtaining can be understood as obtaining from configuration, receiving, receiving after a request succeeds, obtaining through self-learning, obtaining through derivation according to unreceived information, or obtaining after processing received information. This will be specifically determined according to an actual need. The embodiments of this application do not impose any restrictions on this. For example, when indication information of a capability sent by a device is not received, it can be inferred that the device does not support the capability.

In an optional embodiment of this application, sending can include broadcasting, broadcasting in a system message, and returning after making a response to a request.

In an optional embodiment of this application, the concepts of aloneness and independence can be the same, so that aloneness and independence can be mixed.

In an optional embodiment of this application, a communication device may include at least one of the following: a communication network element and a terminal.

In an optional embodiment of this application, a communication network element may include at least one of the following: a core network network element and a radio access network network element.

In an optional embodiment of this application, the core network network element (CN network element) may include, but is not limited to, at least one of the following: a core network device, a core network node, a core network function, a core network network element, a mobility management entity (Mobility Management Entity, MME), an access and mobility management function (Access Management Function, AMF), a session management function (Session Management Function, SMF), a user plane function (User Plane Function, UPF), a serving GW (serving GW, SGW), a PDN gate way (PDN Gate Way, PDN gate way), a policy control function (Policy Control Function, PCF), a policy and charging rules function (Policy and Charging Rules Function, PCRF), a serving GPRS support node (SGSN), a gateway GPRS support node (Gateway GPRS Support Node, GGSN), an edge application server discovery function (Edge Application Server Discovery Function, EASDF), a unified data management (Unified Data Management, UDM), a unified data repository (Unified Data Repository, UDR), a home subscriber server (Home Subscriber Server, HSS), a centralized network configuration (Centralized network configuration, CNC), a network repository function (Network Repository Function, NRF), a network exposure function (NEF), a local NEF (Local NEF, or L-NEF), a binding support function (Binding Support Function, BSF), an application function (Application Function, AF), a data collection coordination function (Data Collection Coordination Function, DCCF), and a messaging framework adaptor function (Messaging Framework Adaptor Function, MFAF).

In an optional embodiment of this application, the RAN network element may include, but is not limited to, at least one of the following: a radio access network device, a radio access network node, a radio access network function, a radio access network unit, a 3rd generation partnership project (3rd Generation Partnership Project, 3GPP) radio access network, a non-3GPP radio access networks, a centralized unit (Centralized Unit, CU), a distributed unit (Distributed Unit, DU), a base station, an evolved Node B (evolved Node B, eNB), a 5G (5th Generation, 5G) base station, a radio network controller (Radio Network Controller, RNC), a base station (NodeB), a non-3 GPP inter working function (Non-3 GPP Inter Working Function, N3IWF), an access controller (Access Controller, AC) node, an access point (Access Point, AP) device or a wireless local area network (Wireless Local Area Networks, WLAN) node, a WiFi node, or the like.

The base station may be a base transceiver station (base transceiver station, BTS) in a global system for mobile communications (Global System for Mobile Communications, GSM) or a code division multiple access (Code Division Multiple Access, CDMA) network, or may be a NodeB (NodeB) in wideband code division multiple access (Wideband Code Division Multiple Access, WCDMA), or may be an eNB or an eNodeB (eNB or e-NodeB, evolutional Node B) in an LTE. The embodiments of this application do not impose any limitation on this. The base station can be referred to as a node B, a node B, a base transceiver station (Base Transceiver Station, BTS), a radio base station, a radio transceiver, a basic service set (Basic Service Set, BSS), an extended service set (Extended Service Set, ESS), a home B node, a home evolution type B node, a transmitting receiving point (Transmitting Receiving Point, TRP), or any other suitable term in the art, as long as the same technical effects are achieved. The base station is not limited to a particular technical vocabulary.

In an optional embodiment of this application, a UE may include one of the following: a terminal device, a terminal device, and a card.

In an optional embodiment of this application, the card may include one of the following: a subscriber identity module (Subscriber Identity Module, SIM) card, a universal subscriber identity module (Universal Subscriber Identity Module, USIM) card, and an embedded subscriber identity module (Embedded Subscriber Identity Module, eSIM) card.

In an optional embodiment of this application, the terminal 11 may include a relay that supports terminal functions and/or a terminal that supports relay functions. The terminal 11 may be further referred to as a terminal device or a user equipment (User Equipment, UE). The terminal can be a mobile phone, a tablet personal computer (Tablet Personal Computer), a laptop computer (Laptop Computer), a personal digital assistant (Personal Digital Assistant, PDA), a handheld computer, a netbook, ultra-mobile personal computer (ultra-mobile personal computer, UMPC), a mobile internet device (Mobile Internet Device, MID), an augmented reality (augmented reality, AR)/virtual reality (virtual reality, VR) device, a robot, a wearable device (Wearable Device), vehicle user equipment (Vehicle User Equipment, VUE), pedestrian user equipment (Pedestrian User Equipment, PUE), a smart home (home devices with wireless communication functions, such as a refrigerator, a television, a washing machine, or furniture), a game console, a personal computer (personal computer, PC), a teller machine, a vending machine, or other terminal side devices. The wearable device includes: a smart watch, a smart hand ring, a smart headphone, smart glasses, a smart j ewelry (a smart bracelet, a smart ring, a smart necklace, a smart bangle, a smart anklet, and the like), a smart wristband, smart clothing, and the like. It should be noted, in the embodiments of this application, a specific type of the terminal 11 is not limited.

In an optional embodiment of this application, the wireless mobile communication system is a cellular mobile communication system. The wireless mobile communication system is a cellular mobile communication system.

In an embodiment of this application, a wireless communication network may be at least one of the following: a public network and a non-public network.

In an embodiment of this application, the non-public network is the abbreviation of non-public network. The non-public network can be referred to as one of the following: non-public communication network. The non-public network can include at least one of the following deployment modes: a physical non-public network, a virtual non-public network, and a non-public network implemented on the public network. In an implementation, the non-public network is a closed access group (Closed Access Group, CAG). A CAG can be composed of a group of terminals.

In an embodiment of this application, the non-public network may include or be referred to as a private network. The private network can be referred to as one of the following: a private communication network, a private network, a local area network (Local Area Network, LAN), a private virtual network (PVN), an isolated communication network, a dedicated communication network, or other names. It should be noted, the embodiments of this application do not impose any restrictions on the naming mode.

In an embodiment of this application, the public network is the abbreviation of public network. The public network can be referred to as one of the following: a public communication network or other names. It should be noted, the embodiments of this application do not impose any restrictions on the naming mode.

In an embodiment of this application, a data packet size may be referred to as a data packet length.

In an embodiment of this application, a data packet may be referred to as a data frame.

In an optional embodiment of this application, the address information may include at least one of the following: a fully qualified domain name (Fully Qualified Domain Name, FQDN), and an Internet protocol (Internet Protocol, IP) address.

In an optional embodiment of this application, information/event is short for information and/or event. For example, a piece of information/event provided by a RAN network element is short for a piece of information and/or an event provided by a RAN network element.

In an optional embodiment of this application, a CN network element that supports a first service includes a CN network element that provides the first service.

In an optional embodiment of this application, a RAN network element associated with the first service identifies that a piece of information/event provided by the first service is provided by the RAN network element.

In an optional embodiment of this application, a CN network element that provides data of a first data set includes a CN network element that assists a RAN network element in providing the data of the first data set. For example, the RAN network element sends the first data set to the CN network element, and the CN network element registers or updates the first data set to a third target end.

In an optional embodiment of this application, the information/event provided by the RAN includes at least one of the following: a network condition, a congestion state, a resource usage state, QoS information (for example, a measurement value of QoS information of a terminal or tunnel), a resource load state of a region, and the like.

In an embodiment of this application, the QoS information includes, but is not limited to, at least one of the following: a data transmission rate, a delay, a bit error rate, and jitter. In an implementation, the data transmission rate includes at least one of the following: an uplink data transmission rate, and a downlink data transmission rate. In an implementation, the delay includes at least one of the following: an uplink delay, a downlink delay, and a roundtrip delay.

In an optional embodiment of this application, the service (for example, the first service) is a service on a servitization interface of the CN network element.

In an optional embodiment of this application, the information publishing or information in published information includes: information and/or events of a wireless mobile communication system (the wireless mobile communication system includes wireless mobile communication and/or a network).

In an optional embodiment of this application, the information publishing indicates that information is published to at least one of the following: a third party (such as a third party except the wireless mobile communication system), or another communication device (such as a communication device in the wireless mobile communication system). Therefore, publishing of the information/event provided by the RAN network element means publishing the information/event to at least one of the following: a third party (such as a third party except the wireless mobile communication system), or another communication device (such as a communication device in the wireless mobile communication system).

In an optional embodiment of this application, information of the CN network element may be used for indexing the CN network element.

In an optional embodiment of this application, information of the RAN network element may be used for indexing the RAN network element.

The first communication device is configured to assist and/or supports assisting the RAN network element in publishing the information/event provided by the RAN network element, which means that the first communication device supports at least one of the following: (1) supporting assisting the RAN network element in publishing information; 2) supporting publishing information provided by the RAN network element. For example, the CN network element may publish information obtained from the RAN through a servitization interface; 3) supporting a first service (for example, publishing the information/event provided by the RAN network element, and providing other communication devices with a subscription and/or notification of the information/event provided by the RAN network element).

In an optional embodiment of this application, a granularity of the information/event provided by the RAN network element includes at least one of the following: per RAN or a RAN network element granularity, per UE or a UE granularity, per tunnel or a tunnel granularity, per traffic or a service granularity.
1) In an implementation, per RAN (per RAN) indicates that the information/events of different RAN network elements may be different. For example, the granularity of the information/event is per RAN, which may indicate that different RAN network elements provide respective information/events.
2) In an implementation, per UE (per UE) indicates that information/events of different UEs may be different. For example, the granularity of the information/event is per UE.
3) In an implementation, per tunnel (per tunnel) indicates that information/events of different tunnels may be different. For example, the granularity of the information/event is per tunnel.
4) In an implementation, per traffic (per traffic) indicates that information/events of different services may be different. For example, the granularity of the information/event is per traffic.

The resource usage state per RAN network element includes: a resource usage state of the RAN network element granularity.

The resource usage state per UE includes: a resource occupation state of the terminal granularity in a RAN network element.

The resource usage state per tunnel includes: a resource occupation state of the tunnel granularity in a RAN network element.

The resource usage state per traffic includes: a resource occupation state of the service granularity in a RAN network element.

In an embodiment of this application, the QoS information includes at least one of the following: a data transmission rate, a delay, a bit error rate, and jitter.

The QoS information per UE includes: QoS information of the terminal granularity, such as a data transmission rate, a delay, a bit error rate, and jitter of the terminal.

The QoS information per tunnel includes: QoS information of the tunnel granularity, such as a data transmission rate, a delay, a bit error rate, and jitter in the tunnel.

The QoS information per traffic includes: QoS information of the service granularity, such as a data transmission rate, a delay, a bit error rate, and jitter of the service.

In an optional embodiment of this application, a non-servitization interface includes at least one of the following: a control plane interface (such as a next generation (Next Generation, NG) interface) between the RAN network element and the CN network element, and a user plane interface (such as an N3 interface) between the RAN network element and the CN network element.

An information processing method and apparatus, a communication device, and a readable storage medium provided by the embodiments of this application will be described below through some embodiments and their application scenarios in combination with the accompanying drawings.

Referring to FIG. 2, an embodiment of this application provides an information processing method, applied to a first communication device. The first communication device includes but is not limited to a CN network element (such as, but not limited to, an AMF, an SMF, a UPF, a DCCF, and an MFAF). When the first communication device is the CN network element, the first communication device may be referred to as a first CN network element. The method includes:

Step 21: The first communication device executes a first operation.

In this embodiment, the first operation may include at least one of the following:
sending a first request message and/or first request information, wherein the first request message is used for at least one of the following: registering a first service, updating the first service, registering a context of the first communication device, updating the context of the first communication device, registering a first data set, and updating the first data set; the first request information includes at least one of the following: information of the first communication device, description information of the first service, information of a radio access network (RAN) network element associated with the first service, information of a core network (CN) network element that supports the first service, description information of the first data set, information of a RAN network element that provides data of the first data set, and information of a CN network element that provides data of the first data set;
receiving a first subscription request message and/or first subscription request information; and
executing a second operation according to the received first subscription request message and/or first subscription request information.

Optionally, the first subscription request message can be used for one of the following: subscribing to a first service, and subscribing to a piece of information/event provided by a RAN network element.

Optionally, the first subscription request information can include at least one of the following: the description information of the first service, the information of the RAN network element associated with the first service, and the information and/or event requested to be subscribed to.

Optionally, the data in the first data set includes the information/event provided by the RAN network element.

Optionally, the first service may be used for at least one of the following: publishing the information/event provided by the RAN network element, providing a subscription to the information/event provided by the RAN network element, and reporting the information/event provided by the RAN network element.

Optionally, the first request information is contained in the first request message for sending; and/or, the first subscription request information is contained in the first subscription request message.

In an implementation, the CN network element that provides the data of the first data set includes a CN network element that assists a RAN network element in providing the data of the first data set. For example, the RAN network element sends the first data set to the CN network element, and the CN network element registers or updates the first data set to a third target end.

In an implementation, the first communication device may send the first request message and/or the first request information to a third target end. The third target end includes at least one of the following: a second communication device, a second CN network element (such as, but not limited to, an NRF, a BSF, a UDR, a UDM, and a CHF), and the like.

In an implementation, the first communication device may receive the first subscription request message and/or the first subscription request information from a third source end. The third source end includes at least one of the following: a third communication device, a third CN network element (such as, but not limited to, an AF and an NEF), and the like.

In an implementation, the first communication device is configured to assist and/or supports assisting the RAN network element in publishing a piece of information/event through a servitization interface.

Optionally, the second operation includes at least one of the following:
determining the RAN network element that provides the information/event;
asking the RAN network element for the information/event; and
reporting the subscribed information/event.

Optionally, the first service is a first service supported by the first communication device; and the core network (CN) network element that supports the first service is the first communication device.

Optionally, the information of the RAN network element may include at least one of the following: an identifier of the RAN network element, address information of the RAN network element, a region served by the RAN network element, information/events capable of being provided by the RAN network element, and information of a terminal served by the RAN network element.

Optionally, the information of the CN network element may include at least one of the following: a type of the CN network element, an identifier of an instance of the CN network element, address information of the CN network element, and information of a terminal served by the CN network element;

Optionally, the information of the first communication device may include at least one of the following: a type of the first communication device, an identifier of an instance of the first communication device, and address information of the first communication device.

In an implementation, the information of the RAN network element may be used for indexing the corresponding RAN network element.

In an implementation, the information of the CN network element may be used for indexing the corresponding CN network element.

Optionally, the description information of the first service includes at least one of the following: a name of the first service, a coverage region of the first service, and a piece of information/event supported and provided by the first service; and/or, the description information of the first data set includes at least one of the following: a name of the first data set, and a data key.

In an implementation, the data key (Data Key) is used for indexing the data in the data set.

Optionally, the first communication device may execute the first operation in a case that a first condition is satisfied. The first condition may include at least one of the following:
the information/event provided by the RAN network element is obtained;
the RAN network element establishes connection to the first communication device, wherein the connection is used for assisting the RAN network element in publishing the information/event provided by the RAN network element; and
the first communication device is configured to assist and/or supports assisting the RAN network element in publishing the information/event provided by the RAN network element.

In some embodiments, the receiving a first subscription request message occurs after the sending a first request message; and/or, the receiving first subscription request information occurs after the sending first request information.

In an implementation, after sending a first request message to a third target end, the first communication device receives the first subscription request message and/or the first subscription request information from a third source end. The third target end includes at least one of the following: a second communication device, a second CN network element (such as, but not limited to, an NRF, a BSF, a UDR, a UDM, and a CHF), and the like. The third source end includes at least one of the following: a third communication device, a third CN network element (such as, but not limited to, an AF and an NEF), and the like.

Optionally, the asking the RAN network element for the subscribed information and/or event includes at least one of the following:
The first communication device determines, according to a granularity of the subscribed information/event, the information/event requested from the RAN network element through a non-terminal associated signaling or a terminal associated signaling;
the first communication device asks the RAN network element for the information/event through a non-servitization interface signaling;
the first communication device asks the RAN network element for the information/event through the non-terminal associated signaling; and
the first communication device asks the RAN network element for the information/event through the terminal associated signaling.

In an implementation, the non-servitization interface signaling includes one of the following: a non-terminal associated (i.e. non per UE, interface granularity) signaling, and a terminal associated (i.e. per UE) signaling.

Optionally, the determining, according to a granularity of the subscribed information/event, the information/event requested from the RAN network element through a non-terminal associated signaling or a terminal associated signaling may include at least one of the following: The first communication device asks the RAN network element for the information/event through the non-terminal associated signaling in a case that a second condition is satisfied; and the first communication device asks the RAN network element for the information/event through the terminal associated signaling in a case that a third condition is satisfied.

Optionally, the asking the RAN network element for the information/event through the non-terminal associated signaling may include: The first communication device asks the RAN network element for the information/event through the non-terminal associated signaling in a case that a second condition is satisfied.

Optionally, the asking the RAN network element for the information/event through the terminal associated signaling may include: The first communication device asks the RAN network element for the information/event through the terminal associated signaling in a case that a third condition is satisfied.

The second condition includes: the subscribed information/event is a piece of information/event at a RAN network element granularity; and the third condition includes: the subscribed information/event is a piece of information/event at a terminal-related granularity.

Optionally, the terminal-related granularity includes at least one of the following: a terminal granularity, a terminal tunnel granularity, and a terminal service granularity.

In an implementation, after asking the RAN network element for the subscribed information and/or an event, the first communication device may receive, from the RAN network element, RAN network element granularity information returned through the signaling at the RAN network element granularity. The RAN network element granularity information includes a tunnel at the RAN network element granularity and the like.

In another implementation, after asking the RAN network element for the subscribed information and/or an event, the first communication device may receive, from the RAN network element, terminal granularity information returned through the signaling at the terminal granularity. The terminal granularity information includes a tunnel of per UE, traffic (traffic) of per UE, and the like.

In another implementation, after receiving the first subscription request message from the third source end, the first communication device may return the subscribed information and/or event to the third source end. The third source end includes at least one of the following: a third communication device, a third CN network element (such as, but not limited to, an AF and an NEF), and the like.

According to the embodiments of this application, in a scenario for subscribing to a piece of information/event of the RAN, a first CN network element (such as, but not limited to, an AMF, an SMF, a UPF, a DCCF, and an MFAF) may assist the RAN in publishing the information/event through a servitization interface, and execute service registration on a second CN network element (such as, but not limited to, an NRF, a BSF, a UDR, a UDM, and a CHF). In a case that a third CN network element (such as an AF and an NEF) needs to subscribe to the information/event of the RAN, the first CN network element may be supported to determine a RAN network element that provides the information/event.

Referring to FIG. 3, an embodiment of this application provides an information processing method, applied to a second communication device. The second communication device includes but is not limited to a CN network element (such as, but not limited to, an NRF, a BSF, a UDR, a UDM, and a CHF). When the second communication device is the CN network element, the second communication device may be referred to as a second CN network element. The method includes:
Step 31: A second communication device obtains second information.

In this embodiment, the second information includes at least one of the following:
a first request message and/or first request information received from a first source end;
a first discovery message and/or first discovery information received from a second source end;
a first query request message and/or first query request information received from the second source end; and
a second subscription request message and/or second subscription request information received from the second source end.

In an implementation, the first source end includes at least one of the following: a first communication device and a first CN network element (such as, but not limited to, an AMF, an SMF, a UPF, a DCCF, and an MFAF).

In an implementation, the second source end includes at least one of the following: a third communication device and a third CN network element (such as, but not limited to, an AF and an NEF).

Optionally, the first request message is used for at least one of the following: registering a first service, updating the first service, registering a context of the first communication device, and updating the context of the first communication device.

Optionally, the first request information can include at least one of the following: information of the first communication device, description information of the first service, information of a RAN network element associated with the first service, information of a CN network element that supports the first service, description information of a first data set, information of a RAN network element that provides data of the first data set, and information of a CN network element that provides data of the first data set.

Optionally, the first discovery message is used for at least one of the following: querying a network element that supports the first service, and querying the RAN network element associated with the first service.

Optionally, the first discovery information may include at least one of the following: region information, information/events, the description information of the first service, information of a CN network element, information of a RAN network element, information of a network element of the second source end, and information of a terminal.

Optionally, the first query request message is used for querying the data in the first data set;
the first query request information includes at least one of the following: the description information of the first data set, a piece of information/event requested to be queried, and the information of the RAN network element;
the second subscription request message is used for at least one of the following: subscribing to the first data set, and subscribing to a piece of information/event provided by the RAN network element; and
the second subscription request information includes at least one of the following: the description information of the first data set, the information/event requested to be subscribed to, and the information of the RAN network element.

Optionally, the first service is used for at least one of the following: publishing the information/event provided by the RAN network element, providing a subscription to the information/event provided by the RAN network element, and reporting the information/event provided by the RAN network element. The data in the first data set includes the information/event provided by the RAN network element.

In some embodiments, the first discovery information is contained in the first discovery message.

In an implementation, the first request information is contained in the first request message.

In an implementation, the first service is a first service supported by the first communication device; and
the CN network element that supports the first service is the first communication device.

In an implementation, the first source end includes at least one of the following: a first communication device, a first CN network element (such as, but not limited to, an AMF, an SMF, a UPF, a DCCF, and an MFAF), and the like.

In an implementation, the second source end includes at least one of the following: a third communication device and a third CN network element (such as, but not limited to, an AF and an NEF). The second communication device may receive the first discovery message from the third CN network element, such as the AF and the NEF.

Step 32: The second communication device executes a third operation according to the second information.

In this embodiment, the third operation may include at least one of the following:
saving first associated information;
querying, according to the first discovery information and/or the first associated information, the RAN network element associated with the first service;
querying, according to the first discovery information and/or the first associated information, the CN network element associated with the first service;
sending third information to the second source end, wherein the third information includes at least one of the following: the information of the RAN network element associated with the first service, and the information of the CN network element that supports the first service;
returning at least one of the following to the second source end: the queried information/event, and the queried data of the first data set; and
reporting at least one of the following to the second source end: the subscribed information/event, and the subscribed data of the first data set.

Optionally, the first associated information may include at least one of the following: the description information of the first service, the information of the RAN network element associated with the first service, the information of the CN network element that supports the first service, the description information of the first data set, the information of the RAN network element that provides the data of the first data set, and the information of the CN network element that provides the data of the first data set.

In an implementation, after receiving the first discovery message from the second source end, the second communication device may send the information of the RAN network element associated with the first service and/or the information of the CN network element that provides the first service to the second source end. The second source end may include at least one of the following: a third communication device and a third CN network element (such as, but not limited to, an AF and an NEF).

Optionally, the description information of the first service includes at least one of the following: a name of the first service, a coverage region of the first service, and a piece of information/event supported and provided by the first service;
and/or, the description information of the first data set includes at least one of the following: a name of the first data set and a data key;
and/or, the information of the RAN network element may include at least one of the following: an identifier of the RAN network element, address information of the RAN network element, a region served by the RAN network element, information/events capable of being provided by the RAN network element, and information of a terminal served by the RAN network element;
and/or, the information of the CN network element may include at least one of the following: a type of the CN network element, an identifier of an instance of the CN network element, address information of the CN network element, and information of a terminal served by the CN network element.

Optionally, the querying, according to the first discovery information and/or the first associated information, the RAN network element associated with the first service may include at least one of the following:
matching, according to the region information in the first discovery information, a region served by the RAN network element in the first associated information, and determining the RAN network element associated with the first service;
matching, according to the information/event in the first discovery information, the information/events capable of being provided by the RAN network element in the first associated information, and determining the RAN network element associated with the first service;
determining, according to the description information of the first service in the first discovery information, the RAN network element associated with the first service;
determining, according to the information of the CN network element in the first discovery information, the information of the RAN network element associated with the first service supported by the CN network element; and
determining, according to the information of the RAN network element in the first discovery information, the RAN network element associated with the first service.

Optionally, the querying, according to the first discovery information and/or the first associated information, the CN network element that supports the first service includes at least one of the following:
matching, according to the region information in the first discovery information, a coverage region of the first service in the first associated information, and determining the CN network element that supports the first service;
matching, according to the information/event in the first discovery information, the information/event supported and provided by the first service in the first associated information, and determining the CN network element that supports the first service;
determining, according to the description information of the first service in the first discovery information, the CN network element that supports the first service;
determining, according to the information of the CN network element in the first discovery information, the CN network element that supports the first service;
matching, according to the information of the terminal in the first discovery information, the terminal served by the CN network element in the first associated information, and determining the CN network element that supports the first service;
matching, according to the region information in the first discovery information, the region served by the RAN network element in the first associated information, and determining the CN network element that supports the first service, wherein the first service is the first service associated with the RAN network element;
matching, according to the information/event in the first discovery information, the information/event that is provided by the RAN network element in the first associated information, and determining the CN network element that supports the first service, wherein the first service is the first service associated with the RAN network element;
determining, according to the information of the RAN network element in the first discovery information, the CN network element that supports the first service, wherein the first service is the first service associated with the RAN network element; and
matching, according to the information of the terminal in the first discovery information, the terminal served by the RAN network element in the first associated information, wherein the first service is the first service associated with the RAN network element.

Optionally, the first discovery information is contained in the first discovery message;
and/or, the first query request information is contained in the first query request message;
and/or, the second subscription request information is contained in the second subscription request message.

According to the embodiments of this application, in a scenario for subscribing to a piece of information/event of the RAN, a first CN network element (such as, but not limited to, an AMF, an SMF, a UPF, a DCCF, and an MFAF) may assist the RAN in publishing the information/event through a servitization interface, and execute service registration on a second CN network element (such as, but not limited to, an NRF, a BSF, a UDR, a UDM, and a CHF). In a case that a third CN network element (such as an AF and an NEF) needs to subscribe to the information/event of the RAN, the first CN network element may be supported to determine a RAN network element that provides the information/event.

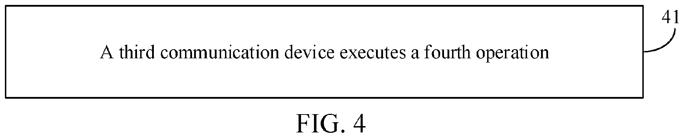

Referring to FIG. 4, an embodiment of this application provides an information processing method, applied to a third communication device. The third communication device includes but is not limited to a CN network element (such as, but not limited to, an AF and an NEF). When the third communication device is the CN network element, the third communication device may be referred to as a third CN network element. The method includes:
Step 41: The third communication device executes a fourth operation.

In this embodiment, the fourth operation may include at least one of the following:
determining a first target end;
sending a first subscription request message and/or first subscription request information to the first target end, wherein the first subscription request message is used for at least one of the following: subscribing to the first service, and subscribing to a piece of information/event provided by a RAN network element; the first subscription request information includes at least one of the following: description information of the first service, information of a RAN network element associated with the first service, and a piece of information and/or event requested to be subscribed to;
sending a first query request message and/or first query request information to a second target end, wherein the first query request message is used for querying the data in the first data set; the first query request information includes at least one of the following: description information of the first data set, a piece of information/event requested to be queried, and information of an RAN network element; and
sending a second subscription request message and/or second subscription request information to the second target end, wherein the second subscription request message is used for at least one of the following: subscribing to the first data set, and subscribing to the information/event provided by the RAN network element; and the second subscription request information includes at least one of the following: the description information of the first data set, the information/event requested to be subscribed to, and the information of the RAN network element.

Optionally, the first service may be used for at least one of the following: publishing the information/event provided by the RAN network element, providing a subscription to the information/event provided by the RAN network element, and reporting the information/event provided by the RAN network element. The data in the first data set includes the information/event provided by the RAN network element.

In an implementation, the first target end includes at least one of the following: a first communication device, a first CN network element (such as, but not limited to, an AMF, an SMF, a UPF, a DCCF, and an MFAF), and the like.

In an implementation, after the first target end sends the first subscription request message, the third communication device may receive the subscribed information and/or event obtained by the first target end.

Optionally, before the step of sending a first subscription request message to a first target end, the fourth operation further includes:
sending a first discovery message and/or first discovery information to the second target end;
wherein the first discovery message may be used for at least one of the following: querying a network element that supports the first service, and querying the RAN network element associated with the first service, the first discovery information may include at least one of the following: the first discovery information includes at least one of the following: region information, information/events, the description information of the first service, information of a CN network element, information of a RAN network element, information of a network element of the second source end, and information of a terminal.

In an implementation, the second target end includes at least one of the following: a second communication device, a second CN network element (such as, but not limited to, an NRF, a BSF, a UDR, a UDM, and a CHF), and the like.

Optionally, after the second target end sends the first discovery message and/or the first discovery information receiving, the third communication device may further receive third information from the second target end. The third information includes at least one of the following: the information of the RAN network element associated with the first service, and the information of the CN network element that supports the first service.

Further, the determining a first target end includes: The third communication device determines a CN network element that provides the first service as the first target end according to the third information.

Optionally, the sending a first discovery message and/or first discovery information to the second target end may include:
The third communication device sends the first discovery message and/or the first discovery information to the second target end in a case that a fourth condition is satisfied. The fourth condition includes at least one of the following:
a subscription demand for the information/event provided by the RAN network element is generated or received;
a subscription demand for the first service is generated or received;
the CN network element that provides the first service is not determined; and
the RAN network element associated with the first service is not determined.

In an implementation, the information/event includes: a network condition, a congestion state, a resource usage state, QoS information (for example, an actual QoS state of a terminal or tunnel), a resource load state of a region, and the like.

Optionally, the first discovery information is contained in the first discovery message; and/or,
the first query request information is contained in the first query request message; and/or,
the first subscription request information is contained in the first subscription request message; and/or,
the second subscription request information is contained in the second subscription request message.

According to the embodiments of this application, in a scenario for subscribing to a piece of information/event of the RAN, a first CN network element may assist the RAN in publishing the information/event through a servitization interface, and execute service registration on a second CN network element (such as, but not limited to, an NRF, a BSF, a UDR, a UDM, and a CHF). In a case that a third CN network element (such as an AF and an NEF) needs to subscribe to the information/event of the RAN, the first CN network element may be supported to determine a RAN network element that provides the information/event.

Application scenario 1 of this embodiment of this application mainly describes a process of indexing a RAN network element in a case of a third CN network element (such as an AF and an NEF) subscribes a piece of information/event of a RAN after a proxy RAN, i.e. a first CN network elements, that publishes information through a servitization interface executes service registration on a second CN network element (which is described below by taking the NRF for example). It is the first CN network element that acts as the RAN to publish the information through the servitization interface. This embodiment is applicable to publishing RAN information at a granularity of per RAN and per UE.

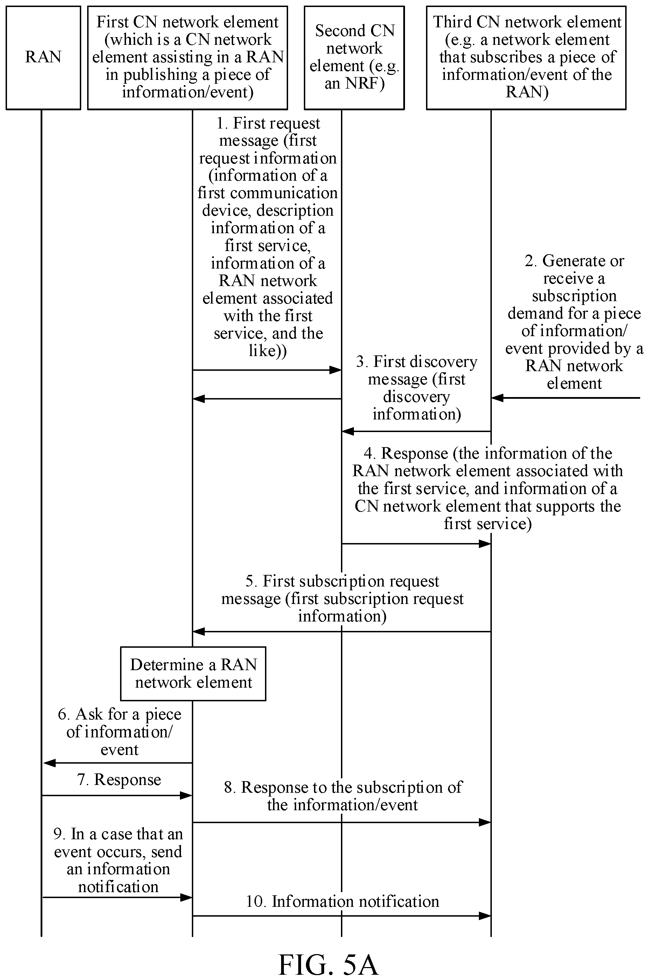

As shown in FIG. 5A, a specific process is as follows:
Step 1: A first CN network element (such as, but not limited to, an AMF, an SMF, a UPF, a DCCF, and an MFAF) sends a first request message and/or first request information to a second CN network element (such as an NRF) to register a first service or update the first service. The first service is used for at least one of the following: publishing a piece of information/event provided by a RAN network element, providing a subscription to the information/event provided by the RAN network element, and reporting the information/event provided by the RAN network element.

The first request information is contained in the first request message.

In some embodiments, the first request information may include at least one of the following: information of a first communication device, description information of the first service, information of a RAN network element associated with the first service, and information of a CN network element that supports the first service.

Step 2: A third CN network element (such as an AF/NEF) generates or receives a subscription demand (such as a network condition, a congestion state, and a resource load state of a region) for the information/event provided by the RAN network element.

Step 3: Optionally, the third CN network element sends a first discovery message to the second CN network element. The first discovery message is used for at least one of the following: querying a network element that supports the first service, and querying the RAN network element associated with the first service; and
the first discovery information includes at least one of the following: region information, information/events, the description information of the first service, information of a CN network element, information of a RAN network element, information of a network element of the second source end, and information of a terminal, as described in the embodiment of FIG. 3.

Further, the second CN network element may query, according to the first discovery information and/or first associated information, the RAN network element associated with the first service, which includes at least one of the following:
matching, according to the region information in the first discovery information, a region served by the RAN network element in the first associated information, and determining the RAN network element associated with the first service;
matching, according to the information/event in the first discovery information, the information/events capable of being provided by the RAN network element in the first associated information, and determining the RAN network element associated with the first service;
determining, according to the description information of the first service in the first discovery information, the RAN network element associated with the first service;
determining, according to the information of the CN network element in the first discovery information, the information of the RAN network element associated with the first service supported by the CN network element; and
determining, according to the information of the RAN network element in the first discovery information, the RAN network element associated with the first service.

Further, the second CN network element may query, according to the first discovery information and/or the first associated information, the CN network element that supports the first service, which includes at least one of the following:
matching, according to the region information in the first discovery information, a coverage region of the first service in the first associated information, and determining the CN network element that supports the first service;
matching, according to the information/event in the first discovery information, the information/event supported and provided by the first service in the first associated information, and determining the CN network element that supports the first service;
determining, according to the description information of the first service in the first discovery information, the CN network element that supports the first service;
determining, according to the information of the CN network element in the first discovery information, the CN network element that supports the first service;
matching, according to the information of the terminal in the first discovery information, the terminal served by the CN network element in the first associated information, and determining the CN network element that supports the first service;
matching, according to the region information in the first discovery information, the region served by the RAN network element in the first associated information, and determining the CN network element that supports the first service, wherein the first service is the first service associated with the RAN network element;
matching, according to the information/event in the first discovery information, the information/event that is provided by the RAN network element in the first associated information, and determining the CN network element that supports the first service, wherein the first service is the first service associated with the RAN network element;
determining, according to the information of the RAN network element in the first discovery information, the CN network element that supports the first service, wherein the first service is the first service associated with the RAN network element; and
matching, according to the information of the terminal in the first discovery information, the terminal served by the RAN network element in the first associated information, wherein the first service is the first service associated with the RAN network element.

Step 4: the second CN network element returns response information, i.e. third information, to the third CN network element. The third information includes at least one of the following: the information of the RAN network element associated with the first service, and the information of the CN network element that supports the first service.

Step 5: The third CN network element sends a first subscription request message to the first CN network element to subscribe to the first service or to subscribe to the information/event provided by the RAN network element. The first subscription request message may include first subscription request information. The first subscription request message and the first subscription request information may be as described above, and will not be elaborated here.

Step 6: The first CN network element receives the first subscription request message, determines which RAN network elements that provides the subscribed information and/or event, and sends an information/event subscription request to the determined RAN network element. The information/event subscription request is not a signaling of a servitization interface.

Optionally, it can determine, according to a granularity for information obtaining, to ask the RAN network element for the information/event through a non-terminal associated signaling or a terminal associated signaling.

Optionally, the first communication device asks the RAN network element for the information/event through the non-terminal associated signaling in a case that a second condition is satisfied.

Optionally, the first communication device asks the RAN network element for the information/event through the terminal associated signaling in a case that a third condition is satisfied.

The second condition includes: the subscribed information/event is a piece of information/event at a RAN network element granularity; and the third condition includes: the subscribed information/event is a piece of information/event at a terminal-related granularity.

Optionally, in a case that the first CN network element already has corresponding RAN information, the information may alternatively be returned directly without a need to ask the RAN network element.

Step 7: The RAN returns a subscription response to the information/event to the first CN network element.

Step 8: The first CN network element returns a subscription response to the information/event to the second CN network element.

Step 9: the RAN network element performs, according to a requirement of the first CN network element, information notification in a case that an event occurs.

Optionally, the RAN network element may return information with the granularity of per RAN through a signaling of per RAN, for example, including a tunnel of per RAN, and/or return information through a signaling of per UE, for example, including a tunnel granularity of per UE, per traffic, and the like.

Step 10: The first CN network element sends an information notification to the third CN network element.

Application scenario 2 of this embodiment of this application mainly describes that after a proxy RAN registers/updates a first data set to a second CN network element (such as, but not limited to, an NRF) through a first CN network element (such as, but not limited to, an AMF, an SMF, a UPF, a DCCF, and an MFAF), a third CN network element (such as an AF and an NEF) returns data of the first data set to the second CN network element.

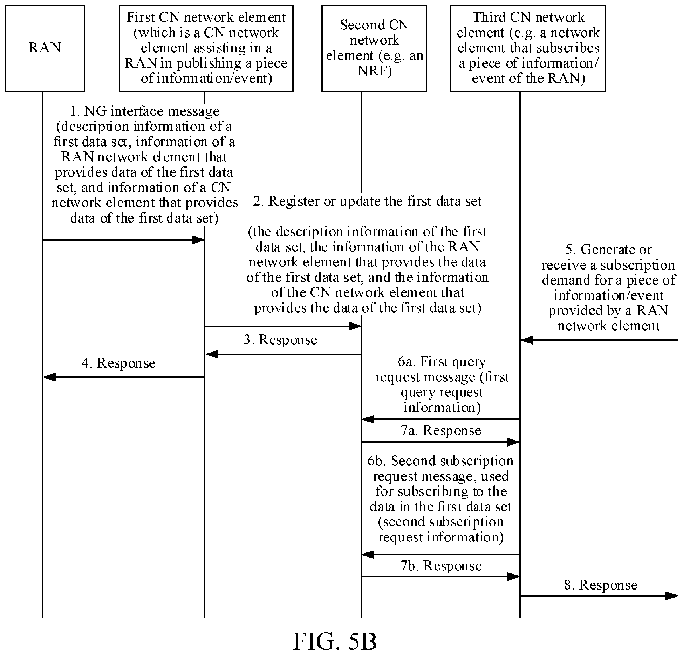

As shown in FIG. 5B, a specific process is as follows:
Step 1: A RAN network element sends an NG interface message to a first CN network element. The NG interface message includes but is not limited to description information of a first data set, information of a RAN network element that provides data of the first data set, and information of a CN network element that provides data of the first data set.
Step 2: The first CN network element sends a first request message and/or first request information to a second CN network element to register or update the first data set. The first request information may include at least one of the following: the description information of the first data set, the information of the RAN network element that provides the data of the first data set, and the information of the CN network element that provides the data of the first data set.
Step 3: The second CN network element returns a response, i.e. a registered/updated first data set, to the first CN network element.
Step 4: The first CN network element returns a response, i.e. the registered/updated first data set, to the RAN network element.
Step 5: The third CN network element (such as an AF/NEF) generates or receives a subscription demand for a piece of information/event provided by the RAN network element.

Optionally, step 6a: The third CN network element sends a first query request message and/or first query request information to the second CN network element to query the data in the first data set. The first query request message may include the first query request information. The first query request message and the first query request information may be as described above, and will not be elaborated here.

Step 7a: The second CN network element returns a response, i.e. the queried information/event, to the third CN network element.

Optionally, step 6b: The third CN network element sends a second subscription request message and/or second subscription request information to the second CN network element, to subscribe to the data in the first data set. The second subscription request message may include the second subscription request information. The second subscription request message and the second subscription request information may be as described above, and will not be elaborated here.

Step 7b: The second CN network element returns a response, i.e. the subscribed data of the first data set, to the third CN network element.

Step 8: The third CN network element feeds back the queried information/event or the subscribed data of the first data set.

An executive body of the information processing method provided by the embodiments of this application may be an information processing apparatus. In the embodiments of this application, using the information processing apparatus to perform the information ordered method is taken as an example to explain the information ordered apparatus provided by the embodiments of this application.

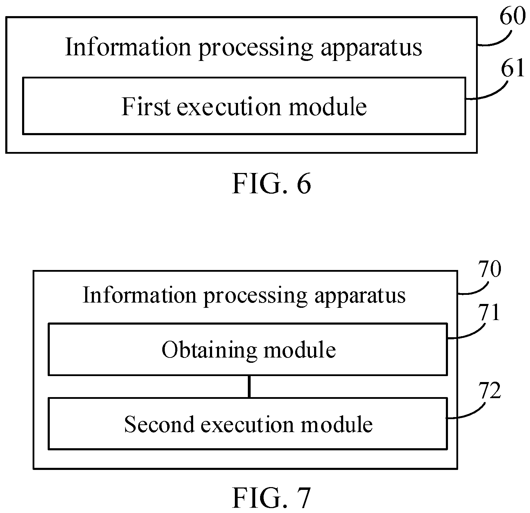

Referring to FIG. 6, FIG. 6 is a schematic structural diagram of an information processing apparatus according to an embodiment of this application. The apparatus is applied to a first communication device. The first communication device includes but is not limited to a CN network element (such as, but not limited to, an AMF, an SMF, a UPF, and a DCCF). When the first communication device is a CN network element, the first communication device may be referred to as a first CN network element. As shown in FIG. 6, the information processing apparatus 60 includes:
a first execution module 61, configured to execute a first operation, wherein the first operation includes at least one of the following:
sending a first request message and/or first request information, wherein the first request message is used for at least one of the following: registering a first service, updating the first service, registering a context of the first communication device, updating the context of the first communication device, registering a first data set, and updating the first data set; the first request information includes at least one of the following: information of the first communication device, description information of the first service, information of a radio access network (RAN) network element associated with the first service, information of a core network (CN) network element that supports the first service, description information of the first data set, information of a RAN network element that provides data of the first data set, and information of a CN network element that provides data of the first data set;
receiving a first subscription request message and/or first subscription request information; and
executing a second operation according to the received first subscription request message; and
wherein the first subscription request message is used for one of the following: subscribing to the first service, and subscribing to a piece of information/event provided by a RAN network element;
the first subscription request information includes at least one of the following: the description information of the first service, the information of the RAN network element associated with the first service, and the information/event requested to be subscribed to;
wherein the second operation includes at least one of the following:
determining the RAN network element that provides the information/event;
asking the RAN network element for the information/event; and
reporting the subscribed information/event;
wherein the first service is used for at least one of the following: publishing the information/event provided by the RAN network element, providing a subscription to the information/event provided by the RAN network element, and reporting the information/event provided by the RAN network element; and
the data in the first data set includes the information/event provided by the RAN network element.

Optionally, the first request information is contained in the first request message for sending;
and/or, the first subscription request information is contained in the first subscription request message.

Optionally, the first service is a first service supported by the first communication device; and
the core network (CN) network element that supports the first service is the first communication device.

Optionally, the information of the RAN network element includes at least one of the following: an identifier of the RAN network element, address information of the RAN network element, a region served by the RAN network element, information/events capable of being provided by the RAN network element, and information of a terminal served by the RAN network element;
and/or, the information of the CN network element includes at least one of the following: a type of the CN network element, an identifier of an instance of the CN network element, address information of the CN network element, and information of a terminal served by the CN network element;
and/or, the information of the first communication device includes at least one of the following: a type of the first communication device, an identifier of an instance of the first communication device, and address information of the first communication device.

Optionally, the description information of the first service includes at least one of the following: a name of the first service, a coverage region of the first service, and a piece of information/event supported and provided by the first service;
and/or, the description information of the first data set includes at least one of the following: a name of the first data set, and a data key.

In some embodiments, the first execution module 61 is further configured to: execute the first operation in a case that a first condition is satisfied.

The first condition includes at least one of the following:
the information/event provided by the RAN network element is obtained;
the RAN network element establishes connection to the first communication device, wherein the connection is used for assisting the RAN network element in publishing the information/event provided by the RAN network element; and
the first communication device is configured to assist and/or supports assisting the RAN network element in publishing the information/event provided by the RAN network element.

Optionally, the receiving a first subscription request message occurs after the sending a first request message;
and/or, the receiving first subscription request information occurs after the sending first request information.

Optionally, the first execution module 61 is further configured to perform at least one of the following:
determining, according to a granularity of the subscribed information/event, the information/event requested from the RAN network element through a non-terminal associated signaling or a terminal associated signaling;
asking the RAN network element for the information/event through a non-servitization interface signaling;
asking the RAN network element for the information/event through the non-terminal associated signaling; and
asking the RAN network element for the information/event through the terminal associated signaling.

Optionally, the first execution module 61 is further configured to perform at least one of the following: The first communication device asks the RAN network element for the information/event through the non-terminal associated signaling in a case that a second condition is satisfied; and The first communication device asks the RAN network element for the information/event through the terminal associated signaling in a case that a third condition is satisfied.

Optionally, the first execution module 61 is further configured to: ask the RAN network element for the information/event through the non-terminal associated signaling in a case that a second condition is satisfied.

Optionally, the first execution module 61 is further configured to: ask the RAN network element for the information/event through the terminal associated signaling in a case that a third condition is satisfied.

The second condition includes: the subscribed information/event is a piece of information/event at a RAN network element granularity; and
the third condition includes: the subscribed information/event is a piece of information/event at a terminal-related granularity.

Optionally, the terminal-related granularity includes at least one of the following: a terminal granularity, a terminal tunnel granularity, and a terminal service granularity.

The information processing apparatus 60 provided in the embodiments of this application can implement the various processes implemented by the method embodiment shown in FIG. 2 and achieve the same technical effects, details of which are omitted here for brevity.

Referring to FIG. 7, FIG. 7 is a schematic structural diagram of an information processing apparatus according to an embodiment of this application. The apparatus is applied to a second communication device. The second communication device includes but is not limited to a CN network element (such as, but not limited to, an NRF and a BSF). When the second communication device is the CN network element, the second communication device may be referred to as a second CN network element. As shown in FIG. 7, the information processing apparatus 70 includes:
an obtaining module 71, configured to obtain second information; and
a second execution module 72, configured to execute a third operation according to the second information;
wherein the second information includes at least one of the following:
a first request message and/or first request information received from a first source end;
a first discovery message and/or first discovery information received from a second source end;
a first query request message and/or first query request information received from the second source end; and
a second subscription request message and/or second subscription request information received from the second source end;
the first request message is used for at least one of the following: registering a first service, updating the first service, registering a context of the first communication device, and updating the context of the first communication device;
the first request information includes at least one of the following: information of the first communication device, description information of the first service, information of a RAN network element associated with the first service, information of a CN network element that supports the first service, description information of a first data set, information of a RAN network element that provides data of the first data set, and information of a CN network element that provides data of the first data set.
the first discovery message is used for at least one of the following: querying a network element that supports the first service, and querying the RAN network element associated with the first service;
the first discovery information includes at least one of the following: region information, information/events, the description information of the first service, information of a CN network element, information of a RAN network element, information of a network element of the second source end, and information of a terminal;
the first query request message is used for querying the data in the first data set;
the first query request information includes at least one of the following: the description information of the first data set, a piece of information/event requested to be queried, and the information of the RAN network element;
the second subscription request message is used for at least one of the following: subscribing to the first data set, and subscribing to the information/event provided by the RAN network element; and
the second subscription request information includes at least one of the following: the description information of the first data set, the information/event requested to be subscribed to, and the information of the RAN network element;
wherein the first service is used for at least one of the following: publishing the information/event provided by the RAN network element, providing a subscription to the information/event provided by the RAN network element, and reporting the information/event provided by the RAN network element; and
the data in the first data set includes the information/event provided by the RAN network element;
wherein the third operation includes at least one of the following:
saving first associated information;
querying, according to the first discovery information and/or the first associated information, the RAN network element associated with the first service;
querying, according to the first discovery information and/or the first associated information, the CN network element associated with the first service;
sending third information to the second source end, wherein the third information includes at least one of the following: the information of the RAN network element associated with the first service, and the information of the CN network element that supports the first service;
returning at least one of the following to the second source end: the queried information/event, and the queried data of the first data set; and
reporting at least one of the following to the second source end: the subscribed information/event, and the subscribed data of the first data set; and
wherein the first associated information includes at least one of the following: the description information of the first service, the information of the RAN network element associated with the first service, the information of the CN network element that supports the first service, the description information of the first data set, the information of the RAN network element that provides the data of the first data set, and the information of the CN network element that provides the data of the first data set.

Optionally, the description information of the first service includes at least one of the following: a name of the first service, a coverage region of the first service, and a piece of information/event supported and provided by the first service; and/or,
the description information of the first data set includes at least one of the following: a name of the first data set and a data key; and/or,
the information of the RAN network element includes at least one of the following: an identifier of the RAN network element, address information of the RAN network element, a region served by the RAN network element, information/events capable of being provided by the RAN network element, and information of a terminal served by the RAN network element; and/or,
the information of the CN network element includes at least one of the following: a type of the CN network element, an identifier of an instance of the CN network element, address information of the CN network element, and information of a terminal served by the CN network element.

Optionally, the second execution module 72 is further configured to perform at least one of the following:
matching, according to the region information in the first discovery information, a region served by the RAN network element in the first associated information, and determining the RAN network element associated with the first service;
matching, according to the information/event in the first discovery information, the information/events capable of being provided by the RAN network element in the first associated information, and determining the RAN network element associated with the first service;
determining, according to the description information of the first service in the first discovery information, the RAN network element associated with the first service;
determining, according to the information of the CN network element in the first discovery information, the information of the RAN network element associated with the first service supported by the CN network element; and
determining, according to the information of the RAN network element in the first discovery information, the RAN network element associated with the first service.

Optionally, the second execution module 72 is further configured to perform at least one of the following:
matching, according to the region information in the first discovery information, a coverage region of the first service in the first associated information, and determining the CN network element that supports the first service;
matching, according to the information/event in the first discovery information, the information/event supported and provided by the first service in the first associated information, and determining the CN network element that supports the first service;
determining, according to the description information of the first service in the first discovery information, the CN network element that supports the first service;
determining, according to the information of the CN network element in the first discovery information, the CN network element that supports the first service;
matching, according to the information of the terminal in the first discovery information, the terminal served by the CN network element in the first associated information, and determining the CN network element that supports the first service;
matching, according to the region information in the first discovery information, the region served by the RAN network element in the first associated information, and determining the CN network element that supports the first service, wherein the first service is the first service associated with the RAN network element;
matching, according to the information/event in the first discovery information, the information/event that is provided by the RAN network element in the first associated information, and determining the CN network element that supports the first service, wherein the first service is the first service associated with the RAN network element;
determining, according to the information of the RAN network element in the first discovery information, the CN network element that supports the first service, wherein the first service is the first service associated with the RAN network element; and
matching, according to the information of the terminal in the first discovery information, the terminal served by the RAN network element in the first associated information, wherein the first service is the first service associated with the RAN network element.

Optionally, the first discovery information is contained in the first discovery message; and/or,
the first query request information is contained in the first query request message; and/or,
the second subscription request information is contained in the second subscription request message.

The information processing apparatus 70 provided in the embodiments of this application can implement the various processes implemented by the method embodiment shown in FIG. 3 and achieve the same technical effects, details of which are omitted here for brevity.

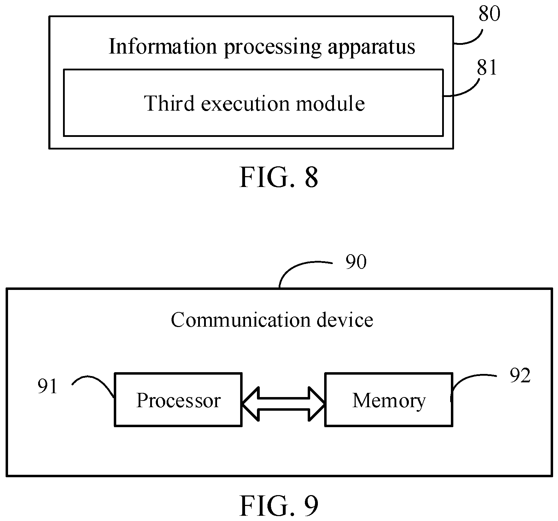

Referring to FIG. 8, FIG. 8 is a schematic structural diagram of an information processing apparatus according to an embodiment of this application. The apparatus is applied to a third communication device. The third communication device includes but is not limited to a CN network element (such as, but not limited to, an AF and an NEF). When the third communication device is the CN network element, the third communication device may be referred to as a third CN network element. As shown in FIG. 8, the information processing apparatus 80 includes:
a third execution module 81, configured to execute a fourth operation, wherein the fourth operation includes at least one of the following:
   determining a first target end;
   sending a first subscription request message and/or first subscription request information to the first target end, wherein the first subscription request message is used for at least one of the following: subscribing to a first service, and subscribing to a piece of information/event provided by a RAN network element; the first subscription request information includes at least one of the following: description information of the first service, information of a RAN network element associated with the first service, and the information/event requested to be subscribed to;
   sending a first query request message and/or first query request information to a second target end, wherein the first query request message is used for querying data in a first data set; and the first query request information includes at least one of the following: description information of the first data set, a piece of information/event requested to be queried, and information of an RAN network element; and
   sending a second subscription request message and/or second subscription request information to the second target end, wherein the second subscription request message is used for at least one of the following: subscribing to the first data set, and subscribing to the information/event provided by the RAN network element; the second subscription request information includes at least one of the following: the description information of the first data set, the information/event requested to be subscribed to, and the information of the RAN network element;
   wherein the first service is used for at least one of the following: publishing the information/event provided by the RAN network element, providing a subscription to the information/event provided by the RAN network element, and reporting the information/event provided by the RAN network element; and
   the data in the first data set includes the information/event provided by the RAN network element.

Optionally, before the step of sending a first subscription request message to a first target end, the fourth operation further includes:
sending a first discovery message and/or first discovery information to the second target end;
wherein the first discovery message is used for at least one of the following: querying a network element that supports the first service, and querying the RAN network element associated with the first service;
the first discovery information includes at least one of the following: the first discovery information includes at least one of the following: region information, information/events, the description information of the first service, information of a CN network element, information of a RAN network element, information of a network element of the second source end, and information of a terminal.

Optionally, the third execution module 81 is further configured to: after the second target end sends the first discovery message and/or the first discovery information receive third information from the second target end. The third information includes at least one of the following: the information of the RAN network element associated with the first service, and the information of the CN network element that supports the first service;
the determining a first target end includes: determining a CN network element that provides the first service as the first target end according to the third information.

Optionally, the third execution module 81 is further configured to: send the first discovery message and/or the first discovery information to the second target end in a case that a fourth condition is satisfied;
wherein the fourth condition includes at least one of the following:
a subscription demand for the information/event provided by the RAN network element is generated or received;
a subscription demand for the first service is generated or received;
the CN network element that provides the first service is not determined; and
the RAN network element associated with the first service is not determined.

Optionally, the first discovery information is contained in the first discovery message; and/or,
the first query request information is contained in the first query request message; and/or,
the first subscription request information is contained in the first subscription request message; and/or,
the second subscription request information is contained in the second subscription request message.

The information processing apparatus 80 provided in the embodiments of this application can implement the various processes implemented by the method embodiment shown in FIG. 4 and achieve the same technical effects, details of which are omitted here for brevity.

Optionally, as shown in FIG. 9, the embodiments of this application further provide a communication device 90, including a processor 91 and a memory 92. The memory 92 stores a program or an instruction runnable or executable on the processor 91. For example, in a case that the communication device 90 is a first communication device, the program or instruction, when run or executed by the processor 91, implements all the steps of the above information processing method embodiment shown in FIG. 2, and can achieve the same technical effects. When the communication device 90 is a second communication device, the program or instruction, when run or executed by the processor 91, implements all the steps of the above method embodiment shown in FIG. 3. When the communication device 90 is a third communication device, the program or instruction, when run or executed by the processor 91, implements the various steps of the above method embodiment shown in FIG. 4, and can achieve the same technical effects, details of which are omitted here for brevity.

The embodiments of this application further provide a readable storage medium. The readable storage medium stores a program or an instruction. The program or instruction, when run or executed by a processor, implements the various processes of the foregoing information processing method embodiment and can achieve the same technical effects, details of which are omitted here for brevity.

The processor is the processor in the terminal in the embodiments described above. The readable storage medium includes a computer-readable storage medium, such as a computer read-only memory (ROM), a random access memory (RAM), a magnetic disk, an compact disc, or the like.

The embodiments of this application further provide a chip. The chip includes a processor and a communication interface. The communication interface is coupled to the processor. The processor is configured to run or execute a program or an instruction to implement the various processes of the foregoing information processing method embodiment, and can achieve the same technical effects, details of which are omitted here for brevity.

It should be understood that the chip mentioned in the embodiments of this application can alternatively be referred to as a system chip, a chip system, or a system-on-chip.

The embodiments of this application further provide a computer program/program product. The computer program/program product is stored in a storage medium. The computer program/program product, when executed by at least one processor, implements the various processes of the foregoing information processing method embodiments, and can achieve the same technical effects, details of which are omitted here for brevity.

It should be noted, the terms "include", "comprise", or any other variations thereof here is intended to cover a non-exclusive inclusion, so that a processor, method, object, or apparatus including a series of elements not only includes those elements, but also includes other elements not specifically listed, or includes inherent elements of this process, method, object, or apparatus. Without more limitations, elements defined by the sentence "including one" does not exclude that there are still other same elements in the process, method, object, or apparatus including these elements. In addition, it should be noted that the scope of the methods and devices in the embodiments of this application is not limited to performing functions in the order shown or discussed, but may alternatively include performing functions in a substantially simultaneous manner or in an opposite order according to the functions involved. For example, the methods described may be executed in a different order than that described, and various steps may alternatively be added, omitted, or combined. In addition, features described with reference to some examples may alternatively be combined in other examples.

According to the descriptions in the foregoing implementations, a person skilled in the art may clearly learn that the method according to the foregoing embodiment may be implemented by relying on software and an essential commodity hardware platform or by using hardware, but the former is a better implementation in most cases. Based on such an understanding, the technical solutions of this application essentially, or the part contributing to the prior art, may be presented in the form of a computer software product. The computer software product is stored in a storage medium (for example, a ROM/RAM, a magnetic disc, or a compact disc) including several instructions to enable a terminal (which may be a mobile phone, a computer, a server, an air conditioner, a network device, or the like) to perform the methods described in all the embodiments of this application.

The embodiments of this application have been described above with reference to the accompanying drawings. This application is not limited to the specific implementations described above, and the specific implementations described above are merely examples and not limitative. Those of ordinary skill in the art may make various forms under the teaching of this application without departing from the spirit of this application and the protection scope of the claims, and these forms shall all fall within the protection of this application.

## Claims

1. An information processing method, comprising:
executing, by a first communication device, a first operation, wherein the first operation comprises at least one of the following:
sending a first request message and/or first request information, wherein the first request message is used for at least one of the following: registering a first service, updating the first service, registering a context of the first communication device, updating the context of the first communication device, registering a first data set, and updating the first data set; the first request information comprises at least one of the following: information of the first communication device, description information of the first service, information of a radio access network (RAN) network element associated with the first service, information of a core network (CN) network element that supports the first service, description information of the first data set, information of a RAN network element that provides data of the first data set, and information of a CN network element that provides data of the first data set;
receiving a first subscription request message and/or first subscription request information; and
executing a second operation according to the received first subscription request message;
wherein the first subscription request message is used for one of the following: subscribing to the first service, and subscribing to a piece of information/event provided by a RAN network element; the first subscription request information comprises at least one of the following: the description information of the first service, the information of the RAN network element associated with the first service, and the information/event requested to be subscribed to;
wherein the second operation comprises at least one of the following:
determining the RAN network element that provides the information/event;
asking the RAN network element for the information/event; and
reporting the subscribed information/event;
wherein the first service is used for at least one of the following: publishing the information/event provided by the RAN network element, providing a subscription to the information/event provided by the RAN network element, and reporting the information/event provided by the RAN network element; and
the data in the first data set comprises the information/event provided by the RAN network element.

2. The method according to claim 1, wherein the first request information is contained in the first request message for sending;
and/or,
the first subscription request information is contained in the first subscription request message.

3. The method according to claim 1, wherein the first service is a first service supported by the first communication device; and
the core network (CN) network element that supports the first service is the first communication device.

4. The method according to claim 1, wherein the information of the RAN network element comprises at least one of the following: an identifier of the RAN network element, address information of the RAN network element, a region served by the RAN network element, information/events capable of being provided by the RAN network element, and information of a terminal served by the RAN network element;
and/or,
the information of the CN network element comprises at least one of the following: a type of the CN network element, an identifier of an instance of the CN network element, address information of the CN network element, and information of a terminal served by the CN network element;
and/or,
the information of the first communication device comprises at least one of the following: a type of the first communication device, an identifier of an instance of the first communication device, and address information of the first communication device.

5. The method according to claim 1, wherein the description information of the first service comprises at least one of the following: a name of the first service, a coverage region of the first service, and a piece of information/event supported and provided by the first service; and/or
the description information of the first data set comprises at least one of the following: a name of the first data set, and a data key.

6. The method according to claim 1, wherein the executing, by the first communication device, a first operation comprises:
executing, by the first communication device, the first operation in a case that a first condition is satisfied; and
the first condition comprises at least one of the following:
the information/event provided by the RAN network element is obtained;
the RAN network element establishes connection to the first communication device, wherein the connection is used for assisting the RAN network element in publishing the information/event provided by the RAN network element; and
the first communication device is configured to assist and/or supports assisting the RAN network element in publishing the information/event provided by the RAN network element.

7. The method according to claim 1, wherein the receiving a first subscription request message occurs after the sending a first request message;
and/or,
the receiving first subscription request information occurs after the sending first request information.

8. The method according to claim 1, wherein the asking the RAN network element for the subscribed information/event comprises at least one of the following:
determining, by the first communication device according to a granularity of the subscribed information/event, the information/event requested from the RAN network element through a non-terminal associated signaling or a terminal associated signaling,
asking, by the first communication device, the RAN network element for the information/event through a non-servitization interface signaling,
asking, by the first communication device, the RAN network element for the information/event through the non-terminal associated signaling, and
asking, by the first communication device, the RAN network element for the information/event through the terminal associated signaling.

9. The method according to claim 8, wherein the determining, by the first communication device according to a granularity of the subscribed information/event, the information/event requested from the RAN network element through a non-terminal associated signaling or a terminal associated signaling comprises at least one of the following: asking, by the first communication device, the RAN network element for the information/event through the non-terminal associated signaling in a case that a second condition is satisfied; and asking, by the first communication device, the RAN network element for the information/event through the terminal associated signaling in a case that a third condition is satisfied;
and/or
the asking, by the first communication device, the RAN network element for the information/event through the non-terminal associated signaling comprises: asking, by the first communication device, the RAN network element for the information/event through the non-terminal associated signaling in a case that a second condition is satisfied; and
and/or
the asking, by the first communication device, the RAN network element for the information/event through the terminal associated signaling comprises: asking, by the first communication device, the RAN network element for the information/event through the terminal associated signaling in a case that a third condition is satisfied;
wherein
the second condition comprises: the subscribed information/event is a piece of information/event at a RAN network element granularity; and
the third condition comprises: the subscribed information/event is a piece of information/event at a terminal-related granularity.

10. The method according to claim 9, wherein the terminal-related granularity comprises at least one of the following: a terminal granularity, a terminal tunnel granularity, and a terminal service granularity.

11. An information processing method, comprising:
obtaining, by a second communication device, second information; and
executing, by the second communication device, a third operation according to the second information;
wherein the second information comprises at least one of the following:
a first request message and/or first request information received from a first source end;
a first discovery message and/or first discovery information received from a second source end;
a first query request message and/or first query request information received from the second source end; and
a second subscription request message and/or second subscription request information received from the second source end;
the first request message is used for at least one of the following: registering a first service, updating the first service, registering a context of the first communication device, and updating the context of the first communication device;
the first request information comprises at least one of the following: information of the first communication device, description information of the first service, information of a RAN network element associated with the first service, information of a CN network element that supports the first service, description information of a first data set, information of a RAN network element that provides data of the first data set, and information of a CN network element that provides data of the first data set;
the first discovery message is used for at least one of the following: querying a network element that supports the first service, and querying the RAN network element associated with the first service;
the first discovery information comprises at least one of the following: region information, information/events, the description information of the first service, information of a CN network element, information of a RAN network element, information of a network element of the second source end, and information of a terminal;
the first query request message is used for querying the data in the first data set; and
the first query request information comprises at least one of the following: the description information of the first data set, a piece of information/event requested to be queried, and the information of the RAN network element;
the second subscription request message is used for at least one of the following: subscribing to the first data set, and subscribing to a piece of information/event provided by the RAN network element;
the second subscription request information comprises at least one of the following: the description information of the first data set, the information/event requested to be subscribed to, and the information of the RAN network element;
wherein the first service is used for at least one of the following: publishing the information/event provided by the RAN network element, providing a subscription to the information/event provided by the RAN network element, and reporting the information/event provided by the RAN network element;
the data in the first data set comprises the information/event provided by the RAN network element;
wherein the third operation comprises at least one of the following:
saving first associated information;
querying, according to the first discovery information and/or the first associated information, the RAN network element associated with the first service;
querying, according to the first discovery information and/or the first associated information, the CN network element associated with the first service;
sending third information to the second source end, wherein the third information comprises at least one of the following: the information of the RAN network element associated with the first service, and the information of the CN network element that supports the first service;
returning at least one of the following to the second source end: the queried information/event, and the queried data of the first data set; and
reporting at least one of the following to the second source end: the subscribed information/event, and the subscribed data of the first data set; and
wherein the first associated information comprises at least one of the following: the description information of the first service, the information of the RAN network element associated with the first service, the information of the CN network element that supports the first service, the description information of the first data set, the information of the RAN network element that provides the data of the first data set, and the information of the CN network element that provides the data of the first data set.

12. The method according to claim 11, wherein the description information of the first service comprises at least one of the following: a name of the first service, a coverage region of the first service, and a piece of information/event supported and provided by the first service;
and/or,
the description information of the first data set comprises at least one of the following: a name of the first data set and a data key;
and/or,
the information of the RAN network element comprises at least one of the following: an identifier of the RAN network element, address information of the RAN network element, a region served by the RAN network element, information/events capable of being provided by the RAN network element, and information of a terminal served by the RAN network element;
and/or,
the information of the CN network element comprises at least one of the following: a type of the CN network element, an identifier of an instance of the CN network element, address information of the CN network element, and information of a terminal served by the CN network element.

13. The method according to claim 11, wherein the querying, according to the first discovery information and/or the first associated information, the RAN network element associated with the first service comprises at least one of the following:
matching, according to the region information in the first discovery information, a region served by the RAN network element in the first associated information, and determining the RAN network element associated with the first service;
matching, according to the information/event in the first discovery information, the information/events capable of being provided by the RAN network element in the first associated information, and determining the RAN network element associated with the first service;
determining, according to the description information of the first service in the first discovery information, the RAN network element associated with the first service;
determining, according to the information of the CN network element in the first discovery information, the information of the RAN network element associated with the first service supported by the CN network element; and
determining, according to the information of the RAN network element in the first discovery information, the RAN network element associated with the first service.

14. The method according to claim 11, wherein the querying, according to the first discovery information and/or the first associated information, the CN network element that supports the first service comprises at least one of the following:
matching, according to the region information in the first discovery information, a coverage region of the first service in the first associated information, and determining the CN network element that supports the first service;
matching, according to the information/event in the first discovery information, the information/event supported and provided by the first service in the first associated information, and determining the CN network element that supports the first service;
determining, according to the description information of the first service in the first discovery information, the CN network element that supports the first service;
determining, according to the information of the CN network element in the first discovery information, the CN network element that supports the first service;
matching, according to the information of the terminal in the first discovery information, the terminal served by the CN network element in the first associated information, and determining the CN network element that supports the first service;
matching, according to the region information in the first discovery information, the region served by the RAN network element in the first associated information, and determining the CN network element that supports the first service, wherein the first service is the first service associated with the RAN network element;
matching, according to the information/event in the first discovery information, the information/event that is provided by the RAN network element in the first associated information, and determining the CN network element that supports the first service, wherein the first service is the first service associated with the RAN network element;
determining, according to the information of the RAN network element in the first discovery information, the CN network element that supports the first service, wherein the first service is the first service associated with the RAN network element; and
matching, according to the information of the terminal in the first discovery information, the terminal served by the RAN network element in the first associated information, wherein the first service is the first service associated with the RAN network element.

15. The method according to claim 11, wherein the first discovery information is contained in the first discovery message;
and/or,
the first query request information is contained in the first query request message;
and/or,
the second subscription request information is contained in the second subscription request message.

16. An information processing method, comprising:
executing, by a third communication device, a fourth operation, wherein the fourth operation comprises at least one of the following:
determining a first target end;
sending a first subscription request message and/or first subscription request information to the first target end, wherein the first subscription request message is used for at least one of the following: subscribing to a first service, and subscribing to a piece of information/event provided by a RAN network element; the first subscription request information comprises at least one of the following: description information of the first service, information of a RAN network element associated with the first service, and the information/event requested to be subscribed to;
sending a first query request message and/or first query request information to a second target end, wherein the first query request message is used for querying data in a first data set; and the first query request information comprises at least one of the following: description information of the first data set, a piece of information/event requested to be queried, and information of an RAN network element; and
sending a second subscription request message and/or second subscription request information to the second target end, wherein the second subscription request message is used for at least one of the following: subscribing to the first data set, and subscribing to the information/event provided by the RAN network element; the second subscription request information comprises at least one of the following: the description information of the first data set, the information/event requested to be subscribed to, and the information of the RAN network element;
wherein the first service is used for at least one of the following: publishing the information/event provided by the RAN network element, providing a subscription to the information/event provided by the RAN network element, and reporting the information/event provided by the RAN network element; and
the data in the first data set comprises the information/event provided by the RAN network element.

17. The method according to claim 16, wherein before the step of sending a first subscription request message to a first target end, the fourth operation further comprises:
sending a first discovery message and/or first discovery information to the second target end;
wherein the first discovery message is used for at least one of the following: querying a network element that supports the first service, and querying the RAN network element associated with the first service; and
the first discovery information comprises at least one of the following: the first discovery information comprises at least one of the following: region information, information/events, the description information of the first service, information of a CN network element, information of a RAN network element, information of a network element of the second source end, and information of a terminal.

18. The method according to claim 17, wherein after the sending a first discovery message and/or first discovery information to the second target end, the method further comprises:
receiving, by the third communication device, third information from the second target end, wherein the third information comprises at least one of the following: the information of the RAN network element associated with the first service, and the information of the CN network element that supports the first service; and
the determining a first target end comprises: determining, by the third communication device, a CN network element that provides the first service as the first target end according to the third information.

19. The method according to claim 17, wherein the sending a first discovery message and/or first discovery information to the second target end comprises:
sending, by the third communication device, the first discovery message and/or the first discovery information to the second target end in a case that a fourth condition is satisfied;
wherein the fourth condition comprises at least one of the following:
a subscription demand for the information/event provided by the RAN network element is generated or received;
a subscription demand for the first service is generated or received;
the CN network element that provides the first service is not determined; and
the RAN network element associated with the first service is not determined.

20. The method according to claim 17, wherein the first discovery information is contained in the first discovery message;
and/or,
the first query request information is contained in the first query request message;
and/or,
the first subscription request information is contained in the first subscription request message;
and/or,
the second subscription request information is contained in the second subscription request message.

21. An information processing apparatus, comprising:
a first execution module, configured to execute a first operation, wherein the first operation comprises at least one of the following:
sending a first request message and/or first request information, wherein the first request message is used for at least one of the following: registering a first service, updating the first service, registering a context of the first communication device, updating the context of the first communication device, registering a first data set, and updating the first data set; the first request information comprises at least one of the following: information of the first communication device, description information of the first service, information of a radio access network (RAN) network element associated with the first service, information of a core network (CN) network element that supports the first service, description information of the first data set, information of a RAN network element that provides data of the first data set, and information of a CN network element that provides data of the first data set;
receiving a first subscription request message and/or first subscription request information; and
executing a second operation according to the received first subscription request message;
wherein the first subscription request message is used for one of the following: subscribing to the first service, and subscribing to a piece of information/event provided by a RAN network element; the first subscription request information comprises at least one of the following: the description information of the first service, the information of the RAN network element associated with the first service, and the information/event requested to be subscribed to;
wherein the second operation comprises at least one of the following:
determining the RAN network element that provides the information/event;
asking the RAN network element for the information/event; and
reporting the subscribed information/event;
wherein the first service is used for at least one of the following: publishing the information/event provided by the RAN network element, providing a subscription to the information/event provided by the RAN network element, and reporting the information/event provided by the RAN network element; and
the data in the first data set comprises the information/event provided by the RAN network element.

22. An information processing apparatus, comprising:
an obtaining module, configured to obtain second information; and
a second execution module, configured to execute a third operation according to the second information;
wherein the second information comprises at least one of the following:
a first request message and/or first request information received from a first source end;
a first discovery message and/or first discovery information received from a second source end;
a first query request message and/or first query request information received from the second source end; and
a second subscription request message and/or second subscription request information received from the second source end;
the first request message is used for at least one of the following: registering a first service, updating the first service, registering a context of the first communication device, and updating the context of the first communication device;
the first request information comprises at least one of the following: information of the first communication device, description information of the first service, information of a RAN network element associated with the first service, information of a CN network element that supports the first service, description information of a first data set, information of a RAN network element that provides data of the first data set, and information of a CN network element that provides data of the first data set;
the first discovery message is used for at least one of the following: querying a network element that supports the first service, and querying the RAN network element associated with the first service;
the first discovery information comprises at least one of the following: region information, information/events, the description information of the first service, information of a CN network element, information of a RAN network element, information of a network element of the second source end, and information of a terminal;
the first query request message is used for querying data in a first data set;
the first query request information comprises at least one of the following: description information of the first data set, a piece of information/event requested to be queried, and information of an RAN network element;
the second subscription request message is used for at least one of the following: subscribing to the first data set, and subscribing to the information/event provided by the RAN network element;
the second subscription request information comprises at least one of the following: the description information of the first data set, the information/event requested to be subscribed to, and the information of the RAN network element;
wherein the first service is used for at least one of the following: publishing the information/event provided by the RAN network element, providing a subscription to the information/event provided by the RAN network element, and reporting the information/event provided by the RAN network element;
the data in the first data set comprises the information/event provided by the RAN network element;
wherein the third operation comprises at least one of the following:
saving first associated information;
querying, according to the first discovery information and/or the first associated information, the RAN network element associated with the first service;
querying, according to the first discovery information and/or the first associated information, the CN network element associated with the first service;
sending third information to the second source end, wherein the third information comprises at least one of the following: the information of the RAN network element associated with the first service, and the information of the CN network element that supports the first service;
returning at least one of the following to the second source end: the queried information/event, and the queried data of the first data set; and
reporting at least one of the following to the second source end: the subscribed information/event, and the subscribed data of the first data set; and
wherein the first associated information comprises at least one of the following: the description information of the first service, the information of the RAN network element associated with the first service, the information of the CN network element that supports the first service, the description information of the first data set, the information of the RAN network element that provides the data of the first data set, and the information of the CN network element that provides the data of the first data set.

23. An information processing apparatus, comprising:
a third execution module, configured to execute a fourth operation, wherein the fourth operation comprises at least one of the following:
determining a first target end;
sending a first subscription request message and/or first subscription request information to the first target end, wherein the first subscription request message is used for at least one of the following: subscribing to a first service, and subscribing to a piece of information/event provided by a RAN network element; the first subscription request information comprises at least one of the following: description information of the first service, information of a RAN network element associated with the first service, and the information/event requested to be subscribed to;
sending a first query request message and/or first query request information to a second target end, wherein the first query request message is used for querying data in a first data set; and the first query request information comprises at least one of the following: description information of the first data set, a piece of information/event requested to be queried, and information of an RAN network element; and
sending a second subscription request message and/or second subscription request information to the second target end, wherein the second subscription request message is used for at least one of the following: subscribing to the first data set, and subscribing to the information/event provided by the RAN network element; the second subscription request information comprises at least one of the following: the description information of the first data set, the information/event requested to be subscribed to, and the information of the RAN network element;
wherein the first service is used for at least one of the following: publishing the information/event provided by the RAN network element, providing a subscription to the information/event provided by the RAN network element, and reporting the information/event provided by the RAN network element; and
the data in the first data set comprises the information/event provided by the RAN network element.

24. A communication device, comprising a processor, a memory, and a program or an instruction stored on the memory and runnable or executable on the processor, wherein the program or instruction, when run or executed by the processor, implements the steps of the information processing method according to any one of claims 1 to 10, or the steps of the information processing method according to any one of claims 11 to 15, or the steps of the information processing method according to any one of claims 16 to 20.

25. A readable storage medium, having a program or an instruction stored thereon, wherein the program or instruction, when run or executed by the processor, implements the steps of the information processing method according to any one of claims 1 to 10, or the steps of the information processing method according to any one of claims 11 to 15, or the steps of the information processing method according to any one of claims 16 to 20.
